# EUROPEAN PATENT APPLICATION

(11) **EP 1 654 920 A1**
(43) Date of publication of application: **10.05.2006**
(21) Application number: 05024467.2
(22) Date of filing: 09.11.2005
(51) Int. Cl.: A01C 3/06

(54) **Rear guard with transporting properties for a manure spreader**

(30) Priority: 09.11.2004 DK 200401721
(71) Applicant: Samson Agro A/S, 8850 Bjerringbro (DK)
(72) Inventor: Norgaard, Steffen, 8800 Viborg (DK); Gjode Skjodsholm, Jeannette, 8870 Langa (DK)
(74) Representative: Nielsen, Leif

(57) **Abstract**

The invention concerns a rear guard (109) for a spreader (104) for spreading natural fertilisers, as e.g. manure or compost, the spreader including comminuting means (105) for cutting up and comminuting the natural fertiliser as well as spreading means (107), where the rear guard is adapted for disposition behind the comminuting means and above the spreading means. The rear guard on the spreader according to the invention includes at least one conveying surface (203) which conveys the comminuted natural fertiliser in direction against the spreading means. The rear guard is furthermore adapted to be disposed so that at least one conveying surface is inclined in relation to the plane defined by the comminuting means. This rear guard may include a rotating belt, a vibrating surface or a super-smooth surface. Furthermore, between the rear guard and comminuting means there is provided a space which is narrowed in direction against the spreading means. Hereby is achieved a continuous and even feeding of all comminuted material down onto the spreading means with consequently large spreading width, and it is also prevented that the material clogs and blocks the spreader.

## Description

The present invention concerns a rear guard for a spreader for spreading natural fertiliser like e.g. manure or compost, the spreader including comminuting means for cutting up and comminuting the material as well as spreading means, where the rear guard is adapted for disposition behind the comminuting means and above the spreading means.

### Background

Manure spreaders are used in farming for spreading all kinds of natural fertilisers, such as solid manure, sewage sludge, agricultural limestone and compost, on farmland. In principle, a manure spreader is a self-propelled vehicle or trailer for a tractor which is filled with the solid manure. When spreading is commenced, the material is drawn or pushed by e.g. chains at the bottom towards the rear end of the vehicle and out through a number of rotating screws and rollers with cutters that cut up and comminute the material. Most of the material falls from the rollers down upon a spreading table from where it is ejected. The spreading table may be designed as a fixed plate across which one or more spreading impellers rotate and sweep off the material. Alternatively, the spreading unit can be designed as rotating discs, possibly with attached blades. On some types of manure spreaders, the rollers may be screened at the rear by a guard.

An important parameter for a manure spreader is its spreading capacity, i.e. how much material it can spread out, the consistency of the material at the spreading, and that the spreading occurs as evenly as possible over as large width as possible, irrespectively of the consistency of the material. A reduced spreading width generally implies a limitation to how great spacing the farmer can have between the wheel tracks in order to attain coverage of the entire farmland area, which in turn is determining the time consumption for the farmer as well as the total power consumption of the fertilisation. Furthermore, spreading of a thin layer of fertilising material is more difficult with a lesser spreading width. An uneven spreading may partly be compensated by driving in tracks with reduced interspacing, so that the sparsely fertilised areas at the sides are fertilised twice, but this way of resolving the problem is obviously far from optimal. It is furthermore advantageous to operate with a number of different working widths, e.g. by regulating the dosing so that the vehicle can drive in the tractor tracks already found on the field. The spreading to the rear in relation to the driving direction of the spreader is also preferred to be relatively small, as the spreading to the rear is disadvantageous and problematic at the track ends at the beginning and end of a track, where the spreading either has to be initiated some distance into the field, or to go beyond the field out on an adjacent road etc. Finally, it is of course desirable with as low power consumption and noise level as possible.

If the manure spreader is an open version without rear guard and with upright rollers, which is most common, some of the material, however, does not fall down on the spreading unit, but is flung off directly already after being cut up by the rotating rollers. This material, however, is not thrown very far, entailing that the spreading is effected over a significantly lesser spreading width. In addition, the material falling down from the rollers and down upon the spreading means hits certain points on the spreading table or the spreading discs at random. In order to be thrown out with the greatest possible force and farthest away, the cut material is to strike more or less centrally at the rotating shafts, but this action cannot be controlled by existing types of manure spreaders. Finally, by the prior art types of manure spreaders with open rear end, there is also the problem that the way in which the material falls off the rollers down to the spreading is very uneven and discontinuous, which also makes difficult and even render impossible an even spreading of the manure material upon the field.

Some manure spreaders are made with the rollers and screws disposed horizontally. The spreading means at the bottom then rotate about their own drive shafts. These types are most often screened off at the rear with a guard located at a fixed distance behind the rollers. The comminuted material is here thrown from the rollers and out upon the guard to a certain extent, from where the material falls down on the spreading means. This type of the manure spreader is, however, not so efficient as the type with upright rollers and open rear end. It spreading capacity is less due to the rear guard which limits the amount and the speed with which the material can be handled and processed, as well as its power consumption is greater, implying more expensive operation. Furthermore, it is a general problem with the guard that the space between roller and guard is easily blocked, a time-consuming and cumbersome circumstance to the farmer, and also it implies wear and possible failure of the mechanical parts. A further drawback of the prior art type of manure spreaders with guards is that the comminuted material, after being thrown out on the rear guard, falls off and down upon the spreading means in lumps, i.e. the feeding of the material and thereby the spreading becomes very uneven also for this type of manure spreader. An uneven feeding of material additionally entails an uneven mechanical load on the spreading means, which in turn causes increased wear and reduced service life of the bearings and other mechanical parts.

A prior art type of manure spreader is designed with vertical rollers for cutting up the material and with a screening rear guard arching around the rollers at the rear. A part of this rear guard immediately behind the rollers consists of a vertical rubber band which assists in sending the material downwards after being cut up. This manure spreader also has, however, the above mentioned problems with blocking and clogging of the guard and that the material still does not fall down centrally on the spreading table at the rotating shafts and is thereby not spread optimally.

A manure spreader of the kind mentioned in the introduction with a fixed rear guard is known inter alia from FR patent application 2 851 411. By this design, it is necessary to trust that the force of gravity will make the comminuted material fall down on the spreading means. A rear guard according to this document will therefore be associated with the above mentioned drawback of the prior art manure spreaders with guards, namely that the comminuted material after being thrown out on the rear guard falls off from it and down on the spreading means in lumps, i.e. the feeding of material and thereby the spreading also becomes very uneven for this type of manure spreader.

The term "fixed rear guard" used in the present description means a rear guard having a surface which in use is situated in a fixed position and which is hit by the cut material, which then falls down against the spreading means under the action of the force of gravity. In contrast, the term "rear guard with a not fixed conveying surface" used in the present description and claims means a rear guard where the surface is imparted some kind of movement that contributes to the moving/conveying of the comminuted material hitting the surface, so that this comminuted material is subsequently led down towards the spreading means.

### Purpose and Description of the Invention

A purpose of the present invention is to provide a manure spreader where the above described problems with an uneven, discontinuous and uncontrollable feeding of the comminuted material down on the spreading means is solved, so that a more even spreading with maximum spreading width and spreading capacity is achieved.

The invention concerns a rear guard for a spreader for spreading natural fertilisers, as e.g. manure or compost, the spreader including comminuting means for cutting up and comminuting the natural fertiliser as well as spreading means, where the rear guard is adapted for disposition behind the comminuting means and above the spreading means. The rear guard is here characterised by including at least one not fixed conveying surface which conveys the comminuted natural fertiliser in direction against the spreading means. The rear guard is furthermore adapted to be disposed so that at least one conveying surface is inclined in relation to the plane defined by the comminuting means. By such a rear guard there is achieved the advantage that the comminuted material is supplied to the spreading means continuously and with an even dosing, which in turn enables an even and optimal spreading onwards from the spreading means and out on the farmland. Furthermore, the rear guard prevents that some of the cut up material escapes hitting the spreading means, which otherwise is a problem with a conventional manure spreader with open rear end, where a part of the material goes out directly from the comminuting means and is not spread properly. The continuous and even feeding combined with the fact that all material is directed down onto the spreading means entails that the spreading width can be increased simultaneously with a far more even spreading of the material. Compared with prior art manure spreaders with a fixed rear guard, the capacity, i.e. the amount of material that may be spread per time unit, is also considerably increased with a rear guard according to the invention, as the material is not transported further. The inclined conveying surface also prevents the space between the rear guard and the comminuting means from being clogged, which is a great problem with prior art types of spreaders. Also, the inclining surface enables that the material can be guided so that it will land centrally on the spreading means, close to the rotating drive shafts, whereby the spreading therefrom is optimised. The rear guard according to the invention is furthermore advantageous by acting as screening of the rotating rollers and screws, whereby safety at the machine, which otherwise may be very dangerous, is considerably increased. The rear guard has furthermore the advantage that it dampens the noise from the cutting process.

In an embodiment of the invention, the rear guard for a spreader as described above, is made conveying by including a moving belt, where the belt may include at least one rubber band. The advantage of using a rubber band for the conveying surface is, among others, that hereby is achieved a flexible and yielding surface. It may thus receive and cushion bumps and blows caused by stones, tiles or the like which sometime come with the manure with great probability. In that the rear guard is of a material which may yield to blows, the wear and the risk of damages and repairs are strongly reduced, as well as reliability is enhanced. Besides, the design with a rubber band constitutes a very simple and cheap embodiment.

The invention also concerns a rear guard for a spreader according to the above mentioned, where the belt includes slats joined in articulated links. This embodiment is advantageous by being very robust and hard-wearing.

Furthermore, the invention concerns a rear guard for a spreader according to the above, which is made conveying by including a vibrating surface or by including a surface provided with super-smooth properties. By the latter are avoided movable parts in the spreading unit while at the same time the rear guard is not requiring any power supply and will thus not increase power consumption of the manure spreader.

The rear guard for a spreader according to the previously mentioned may also be adapted for being disposed so that between the rear guard and the comminuting means a space is formed that narrows in direction downwards against the spreading means. How close to the comminuting means the guard is to be situated at the bottom is mainly determined by the material having to hit the spreading table or the spreading discs centrally when it falls off the guard. By increasing the distance from the rear guard to the comminuting means above, a significant increase of the spreading capacity of the manure spreader is attained compared with prior art types of spreaders where a rear guard is disposed at a fixed and uniform distance behind the comminuting means. The spreading capacity is, as mentioned before, an important and often limiting parameter to how fast and how much manure or the like a farmer may distribute, why even a small increase of the capacity is a great advantage. Finally, such a space as described above contributes to avoiding the very inexpedient clogging of the material, and blocking of the machinery is avoided.

In a still further embodiment of the invention, the rear guard for a spreader is constituted by a substantially plane surface which is inclined at an angle of preferably 10° - 90° in relation to the plane defined by the comminuting means. By such an inclination, experiments have shown a substantial increase in the spreading capacity of the manure spreader.

A further embodiment includes a rear guard for a spreader of a yielding material. Hereby is achieved the advantage that the rear guard can absorb and resist bumps and impacts from e.g. stones and the like with the consequent advantages, as described above.

A further embodiment specifies a rear guard for a spreader, which rear guard includes yielding suspension links. The rear guard may e.g. be resiliently suspended behind the comminuting means, and the advantages of this are the same as mentioned above, which are achieved by using a yielding material.

According to the invention, the rear guard may be part of a dismountable unit. This may be provided by e.g. mounting the rear guard on hinges at one side so that it may be swung to the side, or possibly so that the entire rear guard can be lifted off or displaced up over the comminuting means during the driving. This property facilitates access to the rollers for e.g. cleaning or repair, thus reducing the maintenance and repair costs. Furthermore, a dismountable unit will enable changing the spreader to a conventional manure spreader with open rear end, which may be an advantage in situations where the user primarily wants to distribute as large amount of material as possible as quickly as possible, without requiring an even or broad spreading.

In yet an embodiment of the invention, the rear guard is furthermore characterised by including a guide rail leading substantially from the lower part of the conveying surface and towards the spreading means. Such a guide rail is advantageous in that the material hereby may be guided precisely from the rear guard onto the spreading table or spreading discs, so that the spreading means may fling the material out with greatest possible force and at the optimal angle and direction. If the conveying surface includes a moving belt, the guide rail may also be mounted so that all material is scraped off the belt and guided onwards in the process.

In yet an embodiment of the invention, the rear guard is substantially composed of a plurality of plane surfaces. Hereby is achieved the advantage that the comminuted material can be guided more accurately down on the spreading means.

The invention furthermore concerns a spreader for spreading natural fertiliser, like manure or compost, including a rear guard described by one or more of the above mentioned features. The advantages thereof are the above described for the rear guard according to the invention.

Finally, the present invention concerns a method for spreading natural fertiliser, as e.g. manure or compost, from a spreader, the spreader including comminuting means for cutting up and comminuting the natural fertiliser, spreading means and a rear guard, where the rear guard is disposed at an angle behind the comminuting means and above the spreading means, the rear guard including at least one conveying surface which conveys the comminuted material in direction down and in towards the spreading means. The advantages thereof are the above described for the rear guard according to the invention.

### Short Description of the Drawings

In the following, the invention is described with reference to the Figures, wherein:
- Fig. 1: shows a manure spreader to be placed behind a tractor;
- Fig. 2A and B: show the spreading unit at the rear of the manure spreader with a rear guard according to the invention, as seen obliquely from behind and from the side, respectively;
- Fig. 3: shows a second embodiment of a rear guard according to the invention, formed by a moving belt with slats joined in articulated links;
- Fig. 4: shows a rear guard designed as a vibrating plate;
- Fig. 5: shows other embodiments of a rear guard according to the invention;
- Fig. 6: shows yet an embodiment of a rear guard according to the invention; and
- Fig. 7: shows a further embodiment of rear guard according to the invention.

### Description of Embodiments

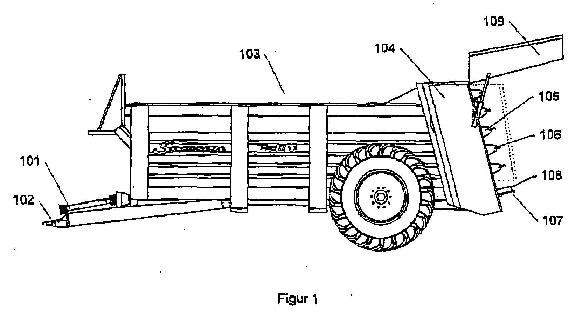

On Fig. 1 appears a manure spreader according to prior art which via the trailer coupling 102 can be hooked at the rear of e.g. a tractor. The power take-off 101 provides power from the tractor engine to the mechanical functions on the trailer, which may be driven by e.g. a hydraulic motor on the trailer itself. The manure or compost or similar material is loaded in the trailer from above 103 and is conveyed by means of e.g. longitudinally moving bottom chains or a piston at the bottom of the trailer (not shown on the Figure) to the rear end, where the spreading unit 104 is mounted. Part of the latter appears as some of the comminuting means which consist of a set of rotating screws 105 with attached cutters 106. Furthermore, a spreading table 107 is faintly seen over which spreading impellers 108 may sweep. Behind the rollers 105 and above the spreading table 105 there is provided a rear guard 109 which may be opened by pivoting upwards, as shown on the Figure. While driving, the rear guard 109 may be closed down as outlined with broken lines, so that part of the comminuted material coming out from the rollers 105 strikes the rear guard, from where it then falls down upon the spreading table 107 to be flung out. In other embodiments of the invention, the rear guard may be permanently mounted without possibility of being opened. Also, it may be dismountable in different ways, e.g. in that the entire rear guard can be lifted off, can be swung to the side about hinges or be moved upwards in the same way as the rear gate of the trailer. The advantage of a dismountable unit is that the manure spreader relatively easily may be changed to function as a conventional spreader with open rear end, where the amount of material that may be run through per time unit can be greater. Furthermore, a dismountable rear guard provides better opportunities for cleaning and maintenance. The more specific design of the rear guard according to the invention is shown in the subsequent Figures.

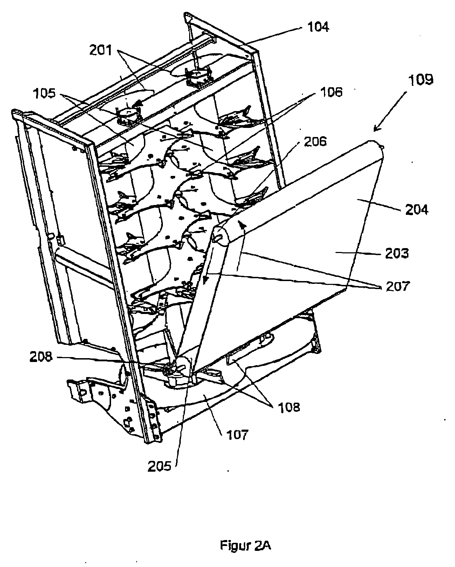

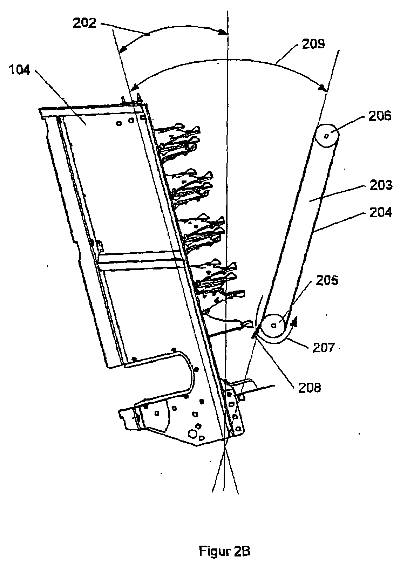

On Fig. 2 appears a spreading unit 104 according to an embodiment of the invention. The first Figure, 2A, shows the spreading unit obliquely from behind and from above, while the spreading unit in Fig. 2B is shown from the side. This spreader consists of two spreading rollers 105 with attached cutters 106. The two rollers 105 rotate in each their direction, as shown by arrows 201, for cutting and comminuting the material as much as possible. In other embodiments, the rollers may rotate opposite ways, or possibly both the same way. The rollers 105 are here mounted at an angle 202 of e.g. 20° with respect to vertical, providing improved feeding and increasing the capacity of material that may be passed between the rollers 105 and cut. Other versions of manure spreaders have more than two rollers, and these may also be provided horizontally. Under the rollers 105, the spreading table 107 is disposed, which on this spreader is a fixed plate. Two spreading impellers 108 on each roller shaft rotates across the spreading table 107 and flings the comminuted material out to the greatest possible width. In another embodiment, the roller shafts are narrowed and have lesser diameter at the section between the screws and the spreading impellers. The comminuted material may hereby fall more centrally at the revolving shafts and thereby be flung farther out. In yet an embodiment, a number of knives may be provided in connection with the previously mentioned narrowing of the shaft, the knives further comminuting the descending material into a more evenly distributed sprinkling down on the impellers. In other spreader versions, the spreading table consists of rotating discs, possibly with blades attached. The specific design of the spreading table is not of any significance to the present invention. Rollers and spreading impellers or spreading discs may also be combined with gears or be driven by each their hydraulic motor, whereby their rotational speed may be adjusted independently of each other, e.g. for adjusting the spreading configuration at the edge of a field.

The above described part of the spreading unit is prior art. The novel features according to the invention consist in that the rear guard 109 includes a conveying surface 203 which is mounted behind the rollers 105 and above the spreading table 107. For the sake of clarity, only the rear guard is shown and not its suspension. A large part of the comminuted material will be ejected directly to the rear from the spreading rollers 105 instead of falling down on the spreading discs 107, or will hit the spreading table offset. This is, however, not desirable, as this part of the material will not be spread as widely and efficiently. This problem is solved by the conveying surface 203 which conveys the material evenly and continuously down towards the spreading means. In the shown embodiment, the guard consists of a band or belt 204 located about two horizontal shafts 205 and 206, of which the lowermost 205 in this case is connected to the motor of the spreader (not shown) and drives the belt 204 around in a movement shown by the arrows 207. When the belt goes around, the material thrown out upon the guard is guided downwards to the spreading table 107 and is controlled so that it falls on the most suitable spot at the centre of the spreading table. The subsequent spreading hereby becomes as efficient as possible. In a preferred embodiment of the invention, the spot where the material strikes the spreading table is controlled by the guide rail 208 which forms the transition from the belt and which can be turned about its longitudinal axis, whereby the descent and the point of impact can be adjusted. Besides, the guide rail provides for scraping material off the belt 204, so that all comes down on the spreading table 107. In a preferred embodiment, the belt is made of a rubber material or similar, which is cheap and very suited for such a rotatable unit, and which also has the advantage of being an elastic material which can yield to possible impacting actions, if e.g. stones or the like come with the manure. In addition, rubber is a very corrosion-resistant material and thus well suited for the very aggressive environment which the manure causes. In a further, preferred embodiment, the rear guard 109 is tilted at an angle 209 of preferably between 10° and 90° relative to the plane defined by the spreading rollers, so that there is a larger space between the spreading rollers and the rear guard at the top than closer to the spreading table. Hereby is prevented that the material clogs and, in the worst case, blocks the spreader, while simultaneously the material is guided to land at the centre of the spreading table.

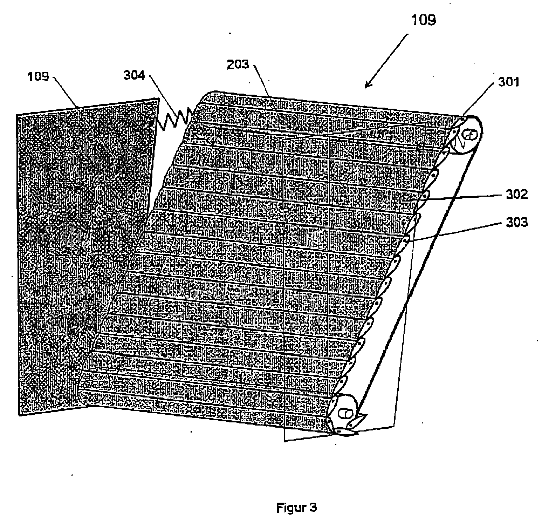

On Fig. 3 is drafted yet an embodiment of a rear guard according to the invention, where the conveying surface 203 is constituted by a moving belt 301 consisting of juxtaposed or partly overlapping slats 302 transversely of the width of the belt. The slats are mutually connected by articulated links 303 and may thus follow around in the movement of the belt. The slats may e.g. be made of steel or other corrosion-proof material that can resist the aggressive environment. In order to minimise impact actions from stones or other foreign objects mixed with the material, the conveying surface 203 may be suspended in resilient or otherwise shock-absorbing links 304. How the rear guard 109 is mounted on the rest of the spreader is not shown and may be envisaged made in numerous ways. In another embodiment of the invention, the conveying surface is designed according to the same principle as in a so-called walking floor.

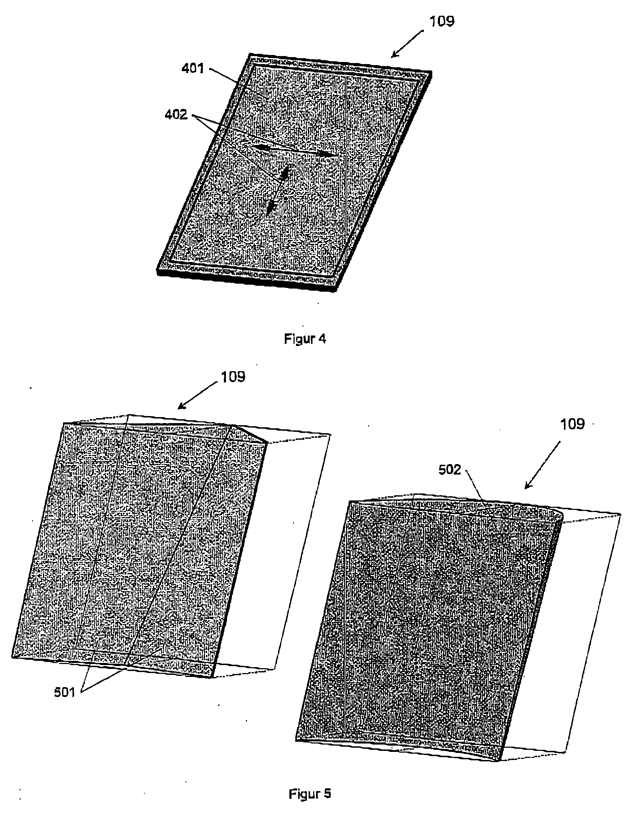

The rear guard according to the invention may also consist of a plate or surface 401, as shown in Fig. 4, which conveys by vibrating in the plane of the plate and shakes the material downwards, so to say. The vibrations are illustrated by the arrows 402 in the Figure.

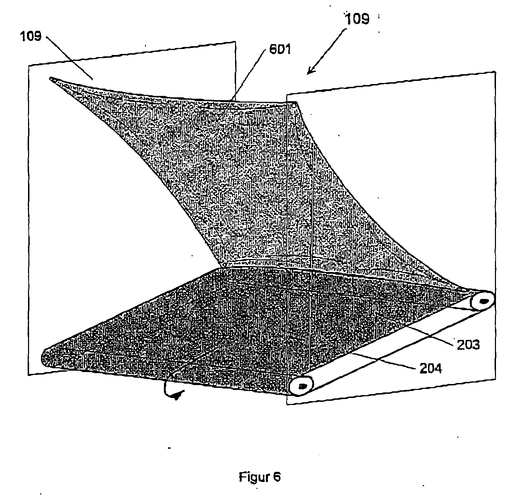

The rear guard may in yet other embodiments of the invention also be composed of a plurality of plane plates 501, or possibly consist of a curved face 502 as shown in Fig. 5.

In yet an embodiment as drafted in Fig. 6, the rear guard 109 includes a conveying surface 203 in the form of a moving belt 204 which conveys the natural fertiliser inwards and downwards against the central part of the spreading means. In this model, the belt 204 is angled with an angle (corresponding to the angle 209 in Fig. 2B) of 60-90° relative to the plane defined by the comminuting means (not shown in this Figure for the sake of clarity, but see Fig. 2B). In order to capture and pass on the material ejected from the upper part of the spreading unit, the rear guard includes a cloth 601, tarpaulin or similar, from which the material falls down on the moving belt. The advantages of using a cloth 601 or similar is that a cheap construction is attained as well as the elasticity of the cloth or tarpaulin provides the comminuted material does not stay thereon in lumps as on a rigid screen, but is shaken off all the time.

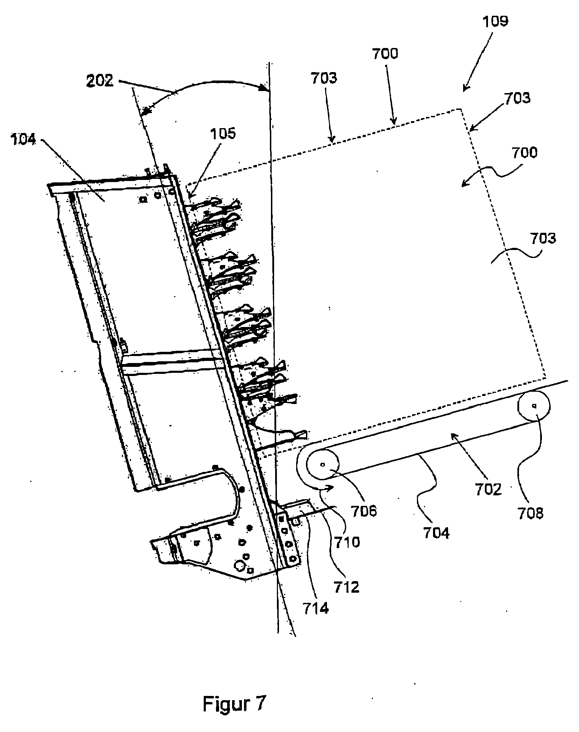

In a further embodiment, as shown in Fig. 7, the rear guard 109 comprises a closed box which at three sides 700 and at the top 701 are surrounded by a flexible tarpaulin 703, and which is provided with a bottom 702 in the form of a moving belt 704 that rotates about two horizontal axles/shafts 706 and 708, of which the lower shaft 706 is connected to the motor of the spreader (not shown), driving the belt 704 around in a movement shown with arrow 710.

When the rollers 105 rotate, the manure will be comminuted and spread on the flexible tarpaulin 703 which transports it down onto the belt 704 due to the flexibility of the tarpaulin. When the belt 704 moves around, the natural fertiliser is conveyed inwards and downwards against the centre of the spreading table 712, over which two spreading impellers 714 are rotating in order to fling out the comminuted material. In this version, the belt 204 is disposed at an angle of about 90° relative to the plane defined by the inclining rollers 105.

In this embodiment, there is no accumulation of material up to the rollers 105 as ample room is provided inside the closed box. This entails that a large spreading width can be attained without appreciably larger power consumption, as the friction arising with a traditional fixed rear guard will be avoided.

It is to be understood that the invention, as mentioned in the present description and Figures, may be modified or changed and still be comprised by the scope of the claims below.

## Claims

1. A rear guard (109) for a spreader (104) for spreading natural fertiliser like e.g. manure or compost, the spreader including comminuting means for cutting up and comminuting the natural fertiliser (105) as well as spreading means (107), where the rear guard (109) is adapted for disposition behind the comminuting means (105) and above the spreading means (107), **characterised by** including at least one not fixed conveying surface (203) which conveys the comminuted natural fertiliser in direction against the spreading means (107), and where the rear guard is adapted to be disposed so that at least one conveying surface (203) is inclined in relation to the plane defined by the comminuting means (105).

2. Rear guard for a spreader according to claim 1, wherein the rear guard is made conveying by including a moving belt (204).

3. Rear guard for a spreader according to claim 2, wherein the belt (204) includes at least one rubber band.

4. Rear guard for a spreader according to claim 2, where the belt (204) includes slats (302) joined in articulated links (303).

5. Rear guard for a spreader according to claim 1, wherein the guard is made conveying by including a vibrating surface (401).

6. Rear guard for a spreader according to one or more of claims 1 - 5, **characterised in that** the rear guar is adapted so as to be disposed so that between the rear guard (109) and the comminuting means (105) a space is formed that narrows in direction downwards against the spreading means (107).

7. Rear guard for a spreader according to one or more of the claims 1 - 6, **characterised in that** the rear guard substantially constitutes a plane surface which is inclined at an angle (209) of preferably 10° - 90° relative to the plane defined by the comminuting means (105).

8. Rear guard for a spreader according to one or more of claims 1 - 7, **characterised by** being composed substantially of a yielding material.

9. Rear guard for a spreader according to one or more of claims 1 - 8, **characterised by** including yielding suspension links.

10. Rear guard for a spreader according to one or more of claims 1 - 9, **characterised by** being part of a dismountable unit.

11. Rear guard for a spreader according to one or more of claims 1 - 10, **characterised by** including a guide rail (208) leading substantially from the lower part of the conveying surface (203) and towards the spreading means (107).

12. Rear guard for a spreader according to one or more of claims 1 - 11, **characterised in that** the rear guard is substantially composed of a plurality of plane surfaces (501).

13. A spreader for spreading natural fertiliser, as e.g. manure or compost, **characterised by** including a rear guard according to one or more of claims 1-12.

14. A method for spreading natural fertiliser, as e.g. manure or compost, from a spreader (104), the spreader including comminuting means for cutting up and comminuting the natural fertiliser (105), spreading means (107) and a rear guard (109), where the rear guard is disposed at an angle behind the comminuting means (105) and above the spreading means (107), the rear guard including at least one conveying surface (203) which conveys the comminuted natural fertiliser in direction down and in towards the spreading means (107).
